# EUROPÄISCHE PATENTSCHRIFT

(11) **EP 1 110 336 B1**
(45) Veröffentlichungstag und Bekanntmachung des Hinweises auf die Patenterteilung: **12.11.2003**
(21) Anmeldenummer: 99955659.0
(22) Anmeldetag: 03.09.1999
(51) Int. Cl.: H04B 7/26

(54) **VERFAHREN UND FUNK-KOMMUNIKATIONSSYSTEM ZUR SYNCHRONISATION VON TEILNEHMERSTATIONEN**
METHOD AND RADIO COMMUNICATION SYSTEM FOR SYNCHRONIZING SUBSCRIBER STATIONS
PROCEDE ET SYSTEME DE COMMUNICATION RADIO POUR LA SYNCHRONISATION DE STATIONS D'ABONNES

(30) Priorität: 03.09.1998 DE 19840232
(43) Veröffentlichungstag der Anmeldung: 27.06.2001
(73) Patentinhaber: SIEMENS AKTIENGESELLSCHAFT, 80333 München (DE)
(72) Erfinder: KOTTKAMP, Meik, D-81369 München (DE); FÄRBER, Michael, D-82515 Wolfratshausen (DE); SOMMER, Volker, D-13503 Berlin (DE); BENZ, Michael, D-13629 Berlin (DE); KLEIN, Anja, D-10709 Berlin (DE); SITTE, Armin, D-10405 Berlin (DE); ULRICH, Thomas, D-67098 Bad-Dürkheim (DE)
(86) Internationale Anmeldenummer: DE9902805
(87) Internationale Veröffentlichungsnummer: WO00014904

(56) Entgegenhaltungen:
- EP-A- 0 795 971
- WO-A-94/30024
- WO-A-98/59443
- EUROPEAN TELECOMMUNICATIONS STANDARD INSTITUTE (ETSI): "Universal Mobile Telcommunications System (UMTS); UMTS Terrestrial Radio Access (UTRA); Concept evaluation (UMTS 30.06 version 3.0.0) " TR 101 146 V3.0.0, [Online] - Dezember 1997 (1997-12) Seiten 1-689, XP002131073 Sophia Antipolis, FRANCE Retrieved from the Internet: <URL:http://www.etsi.org/>
- DAHLMAN E ET AL: "UMTS/IMT-2000 BASED ON WIDEBAND CDMA" IEEE COMMUNICATIONS MAGAZINE,US,IEEE SERVICE CENTER. PISCATAWAY, N.J, Bd. 36, Nr. 9, 1. September 1998 (1998-09-01), Seiten 70-80, XP000784828 ISSN: 0163-6804

## Beschreibung

Die Erfindung betrifft ein Verfahren und ein Funk-Kommunikationssystem zur Synchronisation von Teilnehmerstationen, insbesondere die Synchronisation innerhalb eines Mobilfunksystems mit breitbandigen Kanälen und TDD- sowie CDMA-Teilnehmerseparierung.

In Funk-Kommunikationssystemen werden Nachrichten (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Für die dritte Mobilfunkgeneration sind zwei Modi vorgesehen, wobei ein Modus einen FDD-Betrieb (frequency division duplex), siehe ETSI STC SMG2 UMTS-L1, Tdoc SMG2 UMTS-L1 221/98, vom 25.8.1998, und der andere Modus einen TDD-Betrieb (time division duplex), siehe DE 198 27 700, bezeichnet. Die Betriebsarten finden in unterschiedlichen Frequenzbändern ihre Anwendung und benutzen beide Zeitschlitze.

Aus ETSI STC SMG2 UMTS-L1, Tdoc SMG2 UMTS-L1 221/98, vom 25.8.1998, ist in den Kapiteln 2.3.3.2.3 und 6.3 für den FDD-Betrieb ein Synchronisationsverfahren beschrieben, daß Synchronisationssequenzen nutzt, die in jedem Zeitschlitz (slot) gesendet werden. Damit ist eine Synchronisation der Teilnehmerstationen auf den Beginn des Zeitschlitzes möglich. Durch die Abfolge der Aussendungen einer zweiten Synchronisationssequenz wird signalisiert, welche Spreizkodegruppe von der Basisstation verwendet wird. Weiterhin ist davon auch der Rahmenbeginn ableitbar.

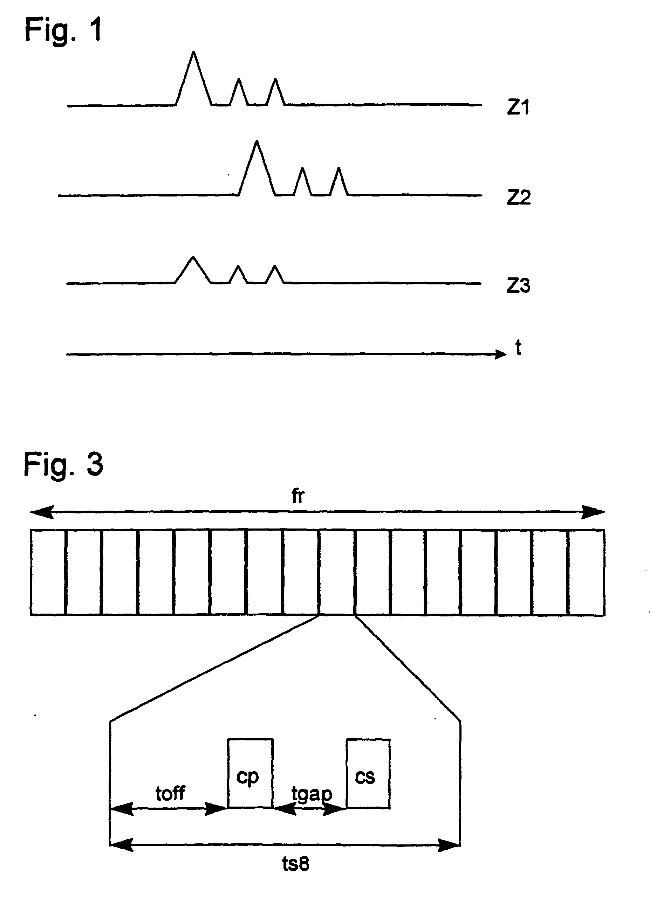

Dieses Synchronisationsverfahren führt jedoch bei einem synchronen Betrieb der Basisstationen zu einem Szenario nach Fig 1. Die Synchronisationssequenzen von Basisstationen zweier Funkzellen Z1, Z3 überlagern sich bei der empfangenden Teilnehmerstation, da die Aussendungen der Synchronisationssequenzen aller Basisstationen, siehe Fig. 10 in ETSI STC SMG2 UMTS-L1, Tdoc SMG2 UMTS-L1 221/98, vom 25.8.1998 auf den Beginn eines Rahmens bezogen sind. Die Überlagerung erschwert eine ordnungsgemäße Synchronisation.

Aus dem Artikel Dahlman et al "UMTS/IMT-2000 Based on Wideband CDMA", IEEE Communications Magazine, US, IEEE Service center, Piscataway, N.J., Bd. 36, Nr. 9, 1. September 1998, Seiten 70-80, XP000784828 ISSN: 0163-6804, ist bekannt, einen Synchronisationskanal zur Synchronisierung einer Teilnehmerstation derart zu strukturieren, daß in einem Rahmen eine Anzahl von ersten Synchronisationssequenzen und parallel hierzu eine Anzahl von zweiten Synchronisationssequenzen gesendet werden. Dabei wird die erste der Anzahl erster Synchronisationssequenzen von allen Basisstationen immer zu Beginn des Rahmens gesendet. Es ist daher für eine diese Sequenzen empfangende Teilnehmerstation möglich, den Beginn eines Rahmens aus dem jeweiligen Beginn der ersten der Anzahl erster Synchronisationssequenzen zu ermitteln.

Aus der WO94/30024 ist ein Verfahren bekannt, bei dem eine Mobilstation parallel Signale von mehreren Basisstationen entsprechend einer sogenannten Makro-Diversität empfängt. Die Zeitdifferenzen der Aussendungen der Basisstationen werden dabei von der Teilnehmerstation ermittelt und zu dem Netzwerk übertragen, das nachfolgend eine zeitliche Abstimmung der Aussendungen der Basisstationen steuert.

Es ist daher Aufgabe der Erfindung, ein Verfahren und ein Funk-Kommunikationssystem anzugeben, mit denen die Synchronisation der Teilnehmerstationen auch bei zumindest teilweise synchronisierten Basisstationen fehlerfrei möglich ist. Diese Aufgabe wird durch das Verfahren mit den Merkmalen des Anspruchs 1 und das Funk-Kommunikationssystem mit den Merkmalen des Anspruchs 13 gelöst. Vorteilhafte Weiterbildungen sind den Unteransprüchen zu entnehmen.

Erfindungsgemäß ist mehreren Basisstationen ein Zeitschlitz zum Senden von zumindest einer Synchronisationssequenz zugeordnet, entweder durch eine übergeordnete Instanz oder durch eigene Auswahl. Benachbarte Basisstationen benutzen einen unterschiedlichen Zeit-Offset bezüglich des Beginns des Zeitschlitzes zum Senden der Synchronisationssequenz. Damit kann auch bei synchronisierten Betrieb der Basisstationen eine Überlagerung ausgeschlossen werden.

Damit die Teilnehmerstation den Zeitschlitzbeginn trotzdem ermitteln kann, wird der Zeit-Offset mitgeteilt. Der Zeit-Offset korrespondiert mit der Wahl einer oder mehrerer Synchronisationssequenzen und/oder der Abfolge mehrerer Synchronisationssequenzen. Die Information zum Zeit-Offset wird auf diese Weise kodiert mitgeteilt. Eine Teilnehmerstation empfängt die Synchronisationsequenz und führt anhand des Empfangszeitpunktes der Synchronisationsequenz und der den Zeit-Offset bezeichnenden erkannten Synchronisationssequenz und/oder der erkannten Abfolge mehrerer Synchronisationssequenzen eine zeitliche Synchronisation durch.

Zur Signalisierung des Zeit-Offsets können beispielsweise viele Varianten einer einzigen Synchronisationssequenz dienen und/oder die Reihenfolge der Aussendung von unterschiedlichen Synchronisationssequenzen. Vorteilhafterweise werden wie im oben beschriebenen FDD-Betrieb zwei Synchronisationssequenzen in einem Zeitschlitz gesendet. Die erste Synchronisationssequenz dient zur Bestimmung des Empfangszeitpunktes und der Grobsynchronisierung. Die Abfolge der zweiten Synchronisationssequenzen über mehrere Aussendungen kodiert den Zeit-Offset.

Nach einer vorteilhaften Ausbildung der Erfindung wird ein zeitlicher Abstand zwischen den zwei Synchronisationssequenzen in einem Zeitschlitz vorgegeben. Damit besteht die Möglichkeit ein einziges, umschaltbares Filter zur Detektion beider Synchronisationssequenzen zu benutzen. Die zweite Synchronisationssequenz kann auch vor der ersten gesendet werden, damit ist der zeitliche Abstand negativ. Werden zwei unterschiedliche Filter benutzt, können die beiden Sequenzen auch gleichzeitig gesendet werden.

Es ist weiterhin vorteilhaft, durch eine Wahl der Synchronisationssequenzen und/oder deren Abfolge weitere Informationen zu übertragen. Damit wird eine schnellere Betriebsbereitschaft der Teilnehmerstationen ermöglicht. Die weiteren Informationen betreffen eine Rahmensynchronisation, von der Basisstation verwendete Mittambeln, Spreizkodes oder Angaben zur Konfiguration eines Organisationskanals. Ein hoher Kodierungsgewinn wird erzielt, wenn sich die Kodierung der weiteren Information durch Wahl und/oder Abfolge der Synchronisationssequenzen über mehrere Zeitschlitze erstreckt. Werden beispielsweise 17 Varianten der zweiten Synchronisationssequenz genutzt und die Abfolge von acht Aussendungen der zweiten Synchronisationssequenz ausgewertet, so stehen 17⁸ Möglichkeiten zur Verfügung. Nur ein kleiner Teil davon muß genutzt werden.

Vorteilhafterweise sind die Synchronisationssequenzen unmodulierte orthogonale Gold Codes. Damit muß das Synchronisationsverfahren des FDD-Betriebes kaum abgewandelt werden. Das Synchronisationsverfahren ist besonders für Funk-Kommunikationssysteme geeignet, bei denen die Zeitschlitze Teil eines TDD-Übertragungsschemas mit breitbandigen Kanälen sind. Hierbei können mehrere Zeitschlitze pro Rahmen für die Synchronisation benutzt werden. Für Multimode-Teilnehmerstationen können somit Teile der Detektionseinrichtung für beide Modi verwendet werden.

Um möglichst wenig Systemressourcen für "Broadcast"-Zwecke zu verbrauchen, werden die Synchronisationssequenzen in Zeitschlitzen gesendet, in denen zusätzlich Informationen eines Organisationskanals übertragen werden. Damit muß nur eine geringe Anzahl von Zeitschlitzen in Abwärtsrichtung (von der Basisstation zur Teilnehmerstation) ständig bereitgehalten werden. Die Freiheitsgrade der Asymmetrie beider Übertragungsrichtungen wird kaum eingeschränkt. Um die durch die Synchronisationssequenzen hervorgerufenen Interferenzen auf die übrigen Kanäle gering zu halten, werden diese mit gegenüber anderen Aussendungen der Basisstation geringerer Leistung gesendet. Durch den Kodierungsgewinn ist dieser Nachteil leicht ausgleichbar.

Ausführungsbeispiele der Erfindung werden anhand der beiliegenden Zeichnungen näher erläutert.

Dabei zeigen
- Fig 1: ein Beispiel für Überlagerungen von Synchronisationssequenzen am Empfänger,
- Fig 2: eine schematische Darstellung der Funkschnittstelle zwischen Basisstation und Teilnehmerstationen,
- Fig 3: ein Schema für die Benutzung eines Zeit-Offsets beim Senden der Synchronisationssequenzen,
- Fig 4: unterschiedlich gestaltete Organisationskanäle, und

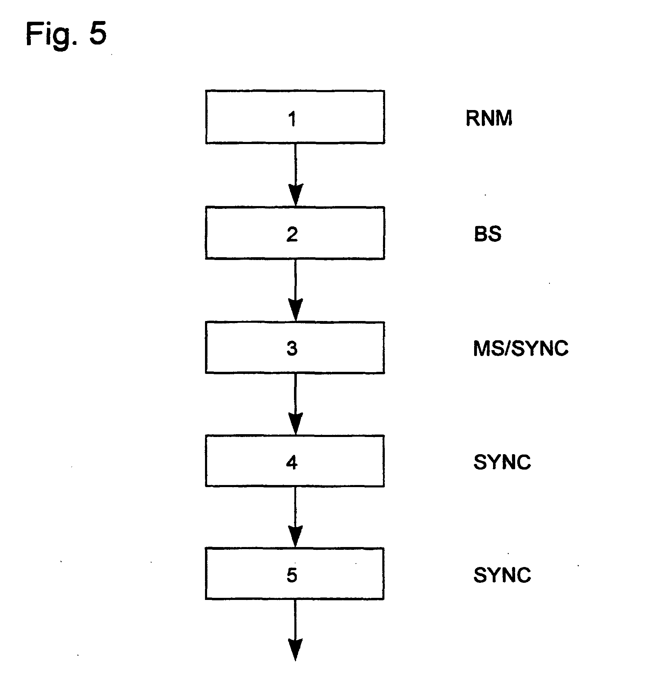

- Fig 5: ein Ablaufdiagramm für die Synchronisation.

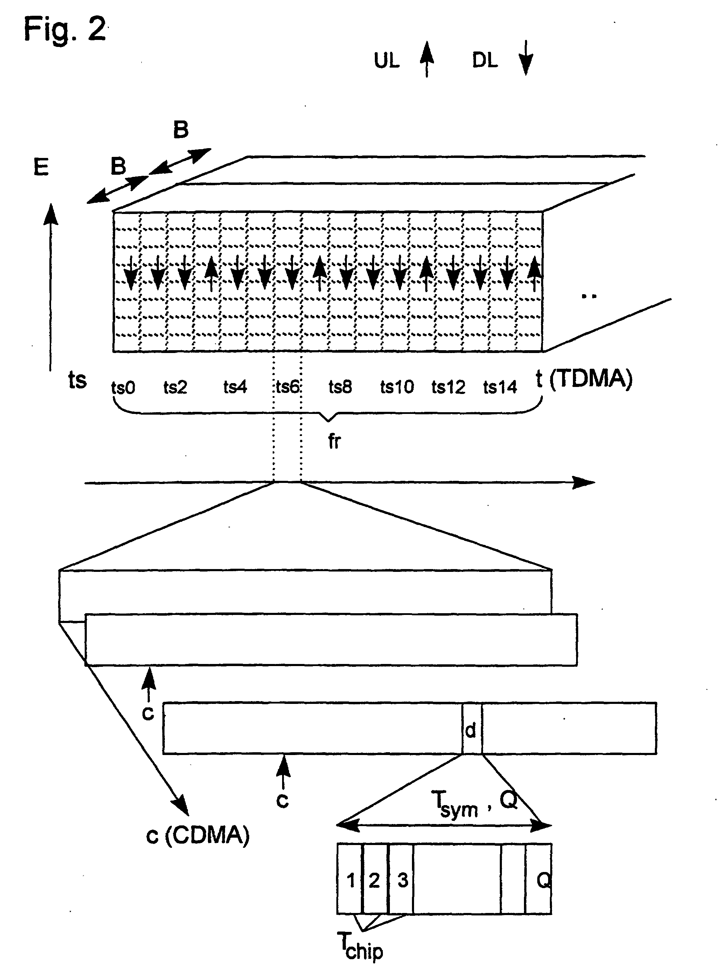

Die Rahmenstruktur der Funkübertragung ist aus Fig 2 ersichtlich. Gemäß einer TDMA-Komponente (time division multiple access) ist eine Aufteilung eines breitbandigen Frequenzbereichs, beispielsweise der Bandbreite B = 5 MHz in mehrere Zeitschlitze ts gleicher Zeitdauer, beispielsweise 16 Zeitschlitze ts0 bis ts15 vorgesehen. Ein Frequenzband erstreckt sich über einen Frequenzbereich B. Ein Teil der Zeitschlitze werden in Abwärtsrichtung DL und ein Teil der Zeitschlitze werden in Aufwärtsrichtung UL benutzt. Beispielhaft ist ein Asymmetrieverhältnis von 3:1 zugunster der Abwärtsrichtung DL gezeigt. Bei diesem TDD-Übertragungsverfahren entspricht das Frequenzband für die Aufwärtsrichtung UL dem Frequenzband für die Abwärtsrichtung DL. Gleiches wiederholt sich für weitere Trägerfrequenzen. Durch die variable Zuordnung der Zeitschlitze ts für Auf- oder Abwärtsrichtung können vielfältige asymmetrische Ressourcenzuteilungen vorgenommen werden.

Innerhalb der Zeitschlitze werden Informationen mehrerer Verbindungen in Funkblöcken übertragen. Die Daten d sind verbindungsindividuell mit einer Feinstruktur, einem Spreizkode c, gespreizt, so daß empfangsseitig beispielsweise n Verbindungen durch diese CDMA-Komponente (code division multiple access) separierbar sind. Die Spreizung von einzelnen Symbolen der Daten d bewirkt, daß innerhalb der Symboldauer T_{sym} Q Chips der Dauer T_{chip} übertragen werden. Die Q Chips bilden dabei den verbindungsindividuellen Spreizkode c.

Innerhalb eines breitbandigen Frequenzbereiches B werden die aufeinanderfolgenden Zeitschlitze ts nach einer Rahmenstruktur gegliedert. So werden 16 Zeitschlitze ts zu einem Rahmen fr zusammengefaßt.

Die verwendeten Parameter der Funkschnittstelle sind vorteilhafterweise:

| | |
|---|---|
| Chiprate | 4.096 Mcps |
| Rahmendauer | 10 ms |
| Anzahl Zeitschlitze | 16 |
| Dauer eines Zeitschlitzes | 625 µs |
| Spreizfaktor | 16 |
| Modulationsart | QPSK |
| Bandbreite | 5 MHz |
| Frequenzwiederholungswert | 1 |

Diese Parameter ermöglichen eine bestmögliche Harmonisierung mit einem FDD-Modus (frequency division duplex) für die 3. Mobilfunkgeneration.

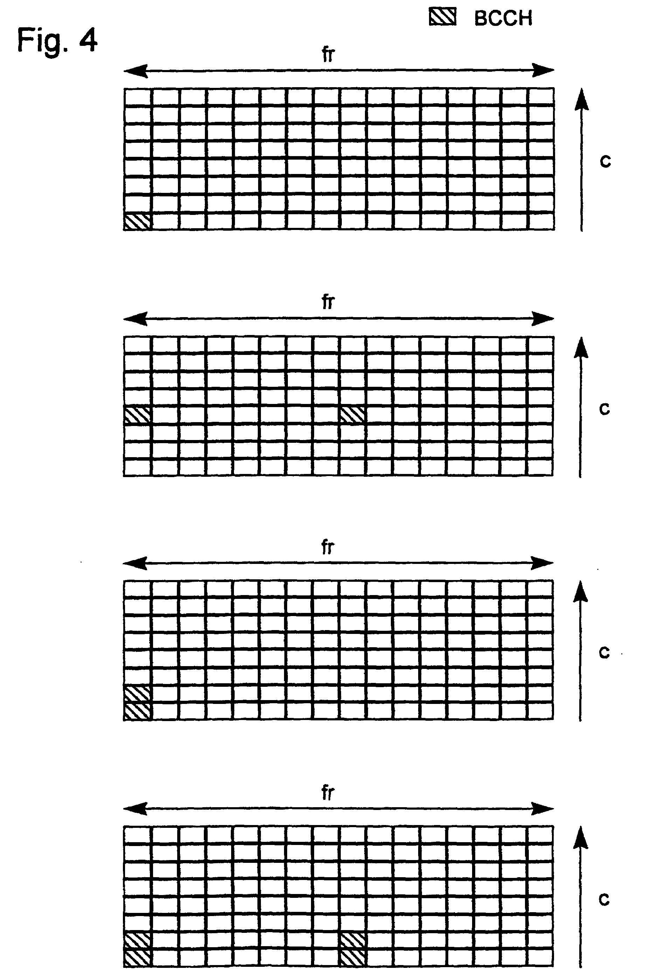

In Abwärtsrichtung nach Fig 3 werden beispielsweise zwei Zeitschlitze ts0, ts8 zur Synchronisation benutzt. So werden in einem Zeitschlitz ts8 jeweils zwei Synchronisationssequenzen cp, cs getrennt durch einen zeitlichen Abstand tgap gesendet. Die Trennung beider Synchronisationssequenzen cp, cs hat den Vorteil verringerter Interferenzen, da die Störleistung beider Sequenzen besser über die Zeit verteilt ist. Die erste Synchronisationssequenz cp ist in jedem Zeitschlitz ts0, ts8 die gleiche. Die zweite Synchronisationssequenz cs kann von Zeitschlitz ts0 zu Zeitschlitz ts8 neu gewählt werden.

Die Wahl und Reihenfolge der zweiten Synchronisationssequenz cs korrespondiert mit einem Zeit-Offset toff, mit dem die Aussendung der ersten Synchronisationssequenz cp bezüglich des Beginns des Zeitschlitzes ts8 verzögert ist. Durch Empfang und Auswertung der Synchronisationssequenzen cs kann die empfangende Teilnehmerstation MS den Zeit-Offset toff ermitteln und bei der Synchronisation berücksichtigen.

Benachbarte Basisstationen BS sind rahmensynchronisiert. Erfindungsgemäß wird benachbarten Basisstationen BS ein unterschiedlicher Zeit-Offset toff für das Senden der Synchronisationssequenzen zugewiesen. Beispielsweise werden 32 unterschiedliche Zeit-Offsets toff verwendet, so daß Zellgruppierungen (cluster) gebildet werden können und bei Änderungen des Zeit-Offsets toff für eine Basisstation BS nicht die gesamte Gruppierung geändert werden muß.

Durch die Wahl und Abfolge der zweiten Synchronisationssequenzen cs über beispielsweise 4 Rahmen fr und zwei Zeitschlitze ts0, ts8 pro Rahmen fr entstehen bei der Verwendung von 17 verschiedenen unmodulierten orthogonalen Cold Codes mit 256 Chip Länge 17⁸ unterschiedliche Möglichkeiten, mit denen zusätzlich zum Zeit-Offset toff weitere Informationen übertragen werden. Durch die vielen Möglichkeiten ist der Kodierungsgewinn groß, so daß die Synchronisationssequenzen cp, cs mit geringer Leistung gesendet werden können.

Die weiteren Informationen betreffen die Rahmensynchronisation, von der Basisstation verwendete Mittambeln, Spreizkodes (wobei die Mittambeln und Spreizkodes unabhängig voneinander vergeben werden) und Angaben zur Konfiguration eines Organisationskanals BCCH. Bei zwei für die Synchronisation verwendeten Zeitschlitzen ts pro Rahmen fr ist der Rahmenbeginn nach Erkennen der Synchronisation in einem Zeitschlitz ts noch mit dem Faktor zwei ungenau. Die Rahmensynchronisation ist folglich leicht durch eine bestimmte Abfolge von zweiten Synchronisationssequenzen cs herbeiführbar. Darüberhinaus wird die spätere Detektion von Informationen des Organisationskanals BCCH beschleunigt, wenn Mittambeln, Spreizkodes und Angaben zur Konfiguration bereits während der Synchronisation übertragen werden.

Insbesondere ergibt sich die Möglichkeit einen skalierbaren Organisationskanal BCCH einzuführen, der unabhängig von der Nutzung des Zeit-Offsets toff durch die Abfolge der Synchronisationssequenzen cs angekündigt wird. Nach Fig 4 können z.B. Organisationsinformationen in einem, zwei oder vier Kanälen übertragen werden. Damit kann die Datenrate des Organisationskanals BCCH den zellspezifischen Bedürfnissen entsprechend der dort angeboten Dienste angepaßt werden. Zukünftige Modifikationen des Organisationskanals BCCH werden damit ermöglicht. Die Parameter (Anzahl der Kanäle, Zeitschlitze und Spreizkodes) des Organisationskanals BCCH müssen somit nicht vorab systemweit festgelegt werden, sondern können während der Synchronisation mitgeteilt werden.

Über die Varianten der Fig 4 hinaus ist es auch möglich, auf zusätzliche Kanäle mit Organisationsinformationen durch die weiteren Informationen aus der Synchronisation hinzuweisen. So können Organisationsinformationen zeitweilig auch in zusätzlichen Kanälen gesendet werden. Der Organisationskanal BCCH wird parallel zu weiteren Nutzdatenverbindungen, jedoch ggf. mit einer größeren Fehlerschutzkodierung gesendet.

Die Aussendungen des Organisationskanals BCCH und der Sychronisationssequenzen cp, cs befinden vorzugsweise sich im gleichen Zeitschlitz ts, wodurch nur zwei Zeitschlitze ts0, ts8 ständig für die Abwärtsrichtung DL reserviert sein müssen. Die Einstellbarkeit der Asymmetrie wird nur wenig eingeschränkt.

Wenn die Asymmetrieverhältnisse im System derartig sind, daß mehr als zwei Zeitschlitze ts0, ts8 für die Abwärtsrichtung DL verwendet werden, so können Organisationsinformationen auch in den restlichen der Abwärtsrichtung DL zugeordneten Zeitschlitzen ts übertragen werden. Es ist dann auch möglich, die Organisationsinformationen ausschließlich in Zeitschlitzen ts zu übertragen, in denen die Synchronisationssequenzen cp, cs nicht gesendet werden. Die Flexibilität des Organisationskanals BCCH bietet zusätzliche Vorteile, da z.B. eine Verteilung auf mehrere Zeitschlitze eine größere Robustheit der Übertragung gegenüber Interferenzen bewirkt.

Die Benutzung einer Multicode-Übertragung im Organisationskanal BCCH (mehrere Spreizkodes c pro Zeitschlitz ts) innerhalb eines Zeitschlitzes ts ermöglicht eine adaptive Erhöhung der Datenrate des Organisationskanals BCCH. Ähnliches kann auch durch eine Reduktion des Spreizfaktors erreicht werden, was ebenfalls durch die Wahl und Abfolge der Synchronisationssequenzen cs mitgeteilt wird. Die Wahl der Zeitschlitze ts zur Übertragung der Organisationsinformationen kann von einer übergeordneten Instanz, z.B. einem Funkressourcenmanager RNM, für mehrere Basisstationen BS koordiniert werden.

Die in einer Steuereinrichtung, z.B. dem Funkressourcenmanager RNM eines Basisstationssystems, vorgenommene Zuweisung von Zeitschlitzen ts0, ts8 für die Synchronisation und von unterschiedlichen Zeit-Offsets toff bezüglich des Beginns des Zeitschlitzes ts0, ts8 zum Senden der Synchronisationssequenzen cp, cs geht der Synchronisation als erster Schritt 1 voraus. In einem zweiten Schritt 2 senden mehrere Basisstationen BS die Synchronisationssequenzen cp, cs in der vorgegeben Reihenfolge, die für jede Basisstation individuell ist und mit dem Zeit-Offset toff korrespondiert.

Eine Teilnehmerstation MS empfängt in einem dritten Schritt 3 die Synchronisationsequenzen cp, cs und führt eine Grobsynchronisation anhand der ersten Synchronisationsequenz cp durch. Durch Auswertung der zweiten Synchronisationsequenzen cs in einem vierten Schritt 4 ist die Zeitschlitz-Synchronisation auf den Beginn des Zeitschlitzes ts möglich, worauf durch Auswertung der weiteren Informationen auch die Rahmensynchronsation in einem fünften Schritt 5 und die Vorbereitung des Empfangs des Organisationskanals BCCH durchgeführt wird. Die Schritte 3 bis 5 werden durch der Teilnehmerstation zugeordnete Synchronisationsmittel SYNC durchgeführt, die beispielsweise ein Signalverarbeitungsprozessor und durch signalangepaßte Filter gebildete Korrelatoren darstellen.

## Patentansprüche

1. Verfahren zur Synchronisation von Teilnehmerstationen (MS) in einem Funk-Kommunikationssystem, bei dem
mehreren Basisstationen (BS) ein Zeitschlitz (ts) zum Senden von zumindest einer Synchronisationssequenz (cp, cs) zugeordnet ist,
**dadurch gekennzeichnet, daß**
benachbarte synchronisierte Basisstationen (BS) einen unterschiedlichen Zeit-Offset (toff) des Sendezeitpunktes der Synchronisationssequenz (cp, cs) innerhalb des Zeitschlitzes (ts) nutzen,
der Zeit-Offset (toff) mit der Wahl einer oder mehrerer Synchronisationssequenzen (cp, cs) und/oder der Abfolge mehrerer Synchronisationssequenzen (cp, cs) korrespondiert,
eine Teilnehmerstation (MS) die Synchronisationsequenz (cp, cs) empfängt,
die Teilnehmerstation (MS) anhand des Empfangszeitpunktes der Synchronisationsequenz (cp, cs) und der den Zeit-Offset (toff) bezeichnenden erkannten Synchronisationssequenz (cp, cs) und/oder der erkannten Abfolge mehrerer Synchronisationssequenzen (cp, cs) eine zeitliche Synchronisation durchführt.

2. Verfahren nach Anspruch 1, bei dem
zwei Synchronisationssequenzen (cp, cs) in einem Zeitschlitz (ts) gesendet werden.

3. Verfahren nach Anspruch 2, bei dem
ein zeitlicher Abstand (tgap) zwischen den zwei Synchronisationssequenzen (cp, cs) in einem Zeitschlitz (ts) vorgegeben wird.

4. Verfahren nach einem der vorherigen Ansprüche, bei dem durch die Basisstation (BS) weitere Informationen durch eine Wahl der Synchronisationssequenzen (cp, cs) und/oder deren Abfolge übertragen werden.

5. Verfahren nach Anspruch 4, bei dem
die weiteren Informationen eine Rahmensynchronisation und/oder von der Basisstation (BS) verwendete Mittambeln und/oder Spreizkodes (c) betreffen.

6. Verfahren nach Anspruch 4, bei dem
die weiteren Informationen Angaben zur Konfiguration eines Organisationskanals (BCCH) betreffen.

7. Verfahren nach Anspruch 6, bei dem
die Angaben zur Konfiguration eine variable Anzahl von Zeitschlitzen und/oder Spreizkodes betreffen.

8. Verfahren nach einem der Ansprüche 4 bis 7, bei dem
sich die Kodierung der weiteren Information durch Wahl und/oder Abfolge der Synchronisationssequenzen (cp, cs) über mehrere Zeitschlitze (ts) erstreckt.

9. Verfahren nach einem der vorherigen Ansprüche, bei dem die Synchronisationssequenzen (cp, cs) unmodulierte orthogonale Gold Codes sind.

10. Verfahren nach einem der vorherigen Ansprüche, bei dem die Zeitschlitze (ts) Teil eines TDD-Übertragungsschemas mit breitbandigen Kanälen sind, wobei mehrere Zeitschlitze (ts) pro Rahmen (fr) für die Synchronisation benutzt werden.

11. Verfahren nach einem der vorherigen Ansprüche, bei dem die Synchronisationssequenzen (cp, cs) in Zeitschlitzen (ts) gesendet werden, in denen zusätzlich Informationen eines Organisationskanals (BCCH) übertragen werden.

12. Verfahren nach einem der vorherigen Ansprüche, bei dem die Synchronisationssequenzen (cp, cs) mit gegenüber anderen Aussendungen der Basisstation (BS) geringerer Leistung gesendet werden.

13. Funk-Kommunikationssystem
mit mehreren Basisstationen (BS) zum Senden von zumindest einer Synchronisationssequenz (cp, cs), und
mit einer Teilnehmerstation (MS) zum Empfangen und Auswerten der Synchronisationsequenz (cp, cs),
**gekennzeichnet durch**
eine Steuereinrichtung (RNM), die benachbarten synchronisierten Basisstationen (BS) einen unterschiedlichen Zeit-Offset (toff) des Sendezeitpunktes der Synchronisationssequenz (cp, cs) innerhalb des Zeitschlitzes (ts) zuweist, wobei der Zeit-Offset (toff) mit der Wahl einer oder mehrerer Synchronisationssequenzen (cp, cs) und/oder der Abfolge mehrerer Synchronisationssequenzen (cp, cs) korrespondiert,
der Teilnehmerstation zugeordnete Synchronisationsmittel (SYNC), die anhand des Empfangszeitpunktes der Synchronisationsequenz (cp, cs) und der den Zeit-Offset (toff) bezeichnenden erkannten Synchronisationssequenz (cp, cs) und/oder der erkannten Abfolge mehrerer Synchronisationssequenzen (cp, cs) eine zeitliche Synchronisation durchführen.

## Claims

1. Method for synchronizing subscriber stations (MS) in a radio communication system, in which a time slot (ts) for transmitting at least one synchronization sequence (cp, cs) is allocated to a number of base stations (BS),
**characterized in that**
adjacent synchronized base stations (BS) use a different time offset (toff) for the time of transmission of the synchronization sequence (cp, cs) within the time slot (ts),
the time offset (toff) corresponds to the choice of one or more synchronization sequences (cp, cs) and/or to the sequence of a number of synchronization sequences (cp, cs),
a subscriber station (MS) receives the synchronization sequence (cp, cs),
the . subscriber station (MS) performs a time synchronization by means of the time of reception of the synchronization sequence (cp, cs) and the detected synchronization sequence (cp, cs) designating the time offset (toff) and/or the detected sequence of a number of synchronization sequences (cp, cs).

2. Method according to Claim 1, in which two synchronization sequences (cp, cs) are transmitted in one time slot (ts).

3. Method according to Claim 2, in which a time gap (t_{gap}) is predetermined between the two synchronization sequences (cp, cs) in a time slot (ts).

4. Method according to one of the preceding claims, in which further information is transmitted by the base station (BS) by a choice of synchronization sequences (cp, cs) and/or their sequence.

5. Method according to Claim 4 in which the further information relates to a frame synchronization and/or midambles and/or spread-spectrum codes (c) used by the base station (BS).

6. Method according to Claim 4, in which the further information relates to information on the configuration of a control channel (BCCH).

7. Method according to Claim 6, in which the information on configuration relates to a variable number of time slots and/or spread-spectrum codes.

8. Method according to one of Claims 4 to 7, in which the coding of the further information extends over a number of time slots (ts) due to the choice and/or sequence of synchronization sequences (cp, cs).

9. Method according to one of the preceding claims, in which the synchronization sequences (cp, cs) are unmodulated orthogonal gold codes.

10. Method according to one of the preceding claims, in which the time slots (ts) are a part of a TDD transmission arrangement with broadband channels, a number of time slots (ts) per frame (fr) being used for the synchronization.

11. Method according to one of the preceding claims, in which the synchronization sequences (cp, cs) are transmitted in time slots (ts) in which information of a control channel (BCCH) is additionally transmitted.

12. Method according to one of the preceding claims, in which the synchronization sequences (cp, cs) are transmitted at lower power compared with other transmissions of the base station (BS).

13. Radio communication system
comprising a number of base stations (BS) for transmitting at least one synchronization sequence (cp, cs),
comprising a subscriber station (MS) for receiving and evaluating the synchronization sequence (cp, cs),
**characterized by**
a controller (RNM) which assigns a different time offset (toff) for the time of transmission of the synchronization sequence (cp, cs) within the time slot to adjacent synchronized base stations, the time offset (toff) corresponding to the choice of one of more synchronization sequences (cp, cs) and/or the sequence of a number of synchronization sequences (cp, cs),
synchronization means (SYNC) allocated to the subscriber station, which perform a time synchronization by means of the time of reception of the synchronization sequence (cp, cs) and the detected synchronization sequence (cp, cs) designating the time offset (toff) and/or the detected sequence of a number of synchronization sequences (cp, cs).

## Revendications

1. Procédé de synchronisation de stations d'abonnés (MS) dans un système de communication radio, dans lequel
un intervalle de temps (ts) servant à l'émission d'au moins une séquence de synchronisation (cp, cs) est attribué à plusieurs stations de base (BS),
**caractérisé en ce que**
des stations de base (BS) synchronisées voisines utilisent un décalage temporel (toff) de l'instant d'émission de la séquence de synchronisation (cp, cs) qui est différent à l'intérieur de l'intervalle de temps (ts),
le décalage temporel (toff) correspond au choix d'une ou plusieurs séquence(s) de synchronisation (cp, cs) et/ou à la succession de plusieurs séquences de synchronisation (cp, cs),
une station d'abonné (MS) reçoit la séquence de synchronisation (cp, cs),
la station d'abonné (MS) exécute une synchronisation temporelle sur la base de l'instant de réception de la séquence de synchronisation (cp, cs) et de la séquence de synchronisation (cp, cs) reconnue spécifiant le décalage temporel (toff) et/ou de la succession reconnue de plusieurs séquences de synchronisation (cp, cs).

2. Procédé selon la revendication 1, dans lequel deux séquences de synchronisation (cp, cs) sont envoyées dans un intervalle de temps (ts).

3. Procédé selon la revendication 2, dans lequel on prédéfinit un intervalle (tgap) entre les deux séquences de synchronisation (cp, cs) dans un intervalle de temps (ts).

4. Procédé selon l'une des revendications précédentes, dans lequel la station de base (BS) transmet des informations supplémentaires à travers un choix des séquences de synchronisation (cp, cs) et/ou leur succession.

5. Procédé selon la revendication 4, dans lequel les informations supplémentaires concernent une synchronisation de trame et/ou des séquences d'apprentissage utilisées par la station de base (BS) et/ou des codes d'étalement (c).

6. Procédé selon la revendication 4, dans lequel les informations supplémentaires concernent des indications relatives à la configuration d'un canal de gestion (BCCH).

7. Procédé selon la revendication 6, dans lequel les indications relatives à la configuration concernent un nombre variable d'intervalles de temps et/ou de codes d'étalement.

8. Procédé selon l'une des revendications 4 à 7, dans lequel le codage des informations supplémentaires à travers le choix et/ou la succession des séquences de synchronisation (cp, cs) s'étend sur plusieurs intervalles de temps (ts).

9. Procédé selon l'une des revendications précédentes, dans lequel les séquences de synchronisation (cp, cs) sont des codes de Gold orthogonaux non modulés.

10. Procédé selon l'une des revendications précédentes, dans lequel les intervalles de temps (ts) font partie d'un schéma de transmission TDD avec canaux à large bande, plusieurs intervalles de temps (ts) par trame (fr) étant utilisés pour la synchronisation.

11. Procédé selon l'une des revendications précédentes, dans lequel les séquences de synchronisation (cp, cs) sont envoyées dans des intervalles de temps (ts) dans lesquels sont transmises, en plus, les informations d'un canal de gestion (BCCH).

12. Procédé selon l'une des revendications précédentes, dans lequel les séquences de synchronisation (cp, cs) sont envoyées avec une puissance plus faible par rapport à d'autres émissions de la station de base (BS).

13. Système de communication radio
comprenant plusieurs stations de base (BS) pour l'émission d'au moins une séquence de synchronisation (cp, cs) et
comprenant une station d'abonné (MS) pour la réception et l'analyse de la séquence de synchronisation (cp, cs),
**caractérisé par**
un dispositif de commande (RNM) qui attribue aux stations de base synchronisées voisines (BS) un décalage temporel (toff) de l'instant d'émission de la séquence de synchronisation (cp, cs) qui est différent à l'intérieur de l'intervalle de temps (ts), le décalage temporel (toff) correspondant au choix d'une ou plusieurs séquence(s) de synchronisation (cp, cs) et/ou à la succession de plusieurs séquences de synchronisation (cp, cs),
les moyens de synchronisation (SYNC) associés à la station d'abonné qui exécutent une synchronisation temporelle sur la base de l'instant de réception de la séquence de synchronisation (cp, cs) et de la séquence de synchronisation (cp, cs) reconnue spécifiant le décalage temporel (toff) et/ou de la succession reconnue de plusieurs séquences de synchronisation (cp, cs).
